# EUROPÄISCHE PATENTSCHRIFT

(11) **EP 0 996 658 B1**
(45) Veröffentlichungstag und Bekanntmachung des Hinweises auf die Patenterteilung: **21.11.2001**
(21) Anmeldenummer: 98938639.6
(22) Anmeldetag: 24.06.1998
(51) Int. Cl.: C08G 64/30

(54) **VERFAHREN ZUR HERSTELLUNG VON POLYCARBONAT**
METHOD FOR PRODUCING POLYCARBONATE
PROCEDE DE PRODUCTION DE POLYCARBONATE

(30) Priorität: 05.07.1997 DE 19728805
(43) Veröffentlichungstag der Anmeldung: 03.05.2000
(73) Patentinhaber: BAYER AG, 51368 Leverkusen (DE)
(72) Erfinder: KÖNIG, Annett, D-47800 Krefeld (DE); HUCKS, Uwe, D-46519 Alpen (DE); SCHULTZ, Claus-Ludolf, D-47803 Krefeld (DE); JEROMIN, Günther, D-47802 Krefeld (DE)
(86) Internationale Anmeldenummer: EP9803863
(87) Internationale Veröffentlichungsnummer: WO9902579

(56) Entgegenhaltungen:
- EP-A- 0 000 753
- EP-A- 0 708 129

## Beschreibung

Gegenstand der vorliegenden Erfindung ist die Herstellung von thermoplastischen Polycarbonaten nach dem Umesterungsverfahren in der Schmelze aus Diphenolen, Kohlensäurediarylestern und gegebenenfalls Verzweigern und/oder Monophenolen bei Temperaturen zwischen 80°C und 400°C und Drücken zwischen 1000 mbar und 0,01 mbar unter Mitverwendung von Katalysatoren, das dadurch gekennzeichnet ist, daß man als Katalysatoren N-alkylsubstituierte Piperidine oder N-alkylsubstituierte Morpholine mit N-Alkylsubstituenten von C₂-C₁₂, vorzugsweise von C₂-C₈ und insbesondere von C₂-C₅ in Mengen von 10⁻² bis 10⁻⁸ Mol, vorzugsweise von 10⁻² bis 10⁻⁵ Mol, pro Mol Diphenol, einsetzt.

Bevorzugte N-Alkylpiperidine sind N-Ethylpiperidin, N-Propylpiperidin, N-Isopropylpiperidin. Bevorzugte N-Alkylmorpholine sind N-Ethylmorpholin, N-Propylmorpholin und N-Isopropylmorpholin.

Sie können allein oder in Kombination, zusammen oder nacheinander eingesetzt werden.

Gemäß US-A 5 434 227 ist das Schmelzumesterungsverfahren unter Verwendung von N-haltigen Katalysatoren bekannt, wobei Piperidin und N-Methylmorpholin genannt sind (Spalte 12, Zeile 44).

So hergestellte Polycarbonate sind thermisch weniger belastbar und weisen Vergilbungen auf (Vergleichsbeispiele 1 und 2 der vorliegenden Schrift).

Die nach dem erfindungsgemäßen Verfahren erhältlichen Polycarbonate zeichnen sich demgegenüber durch eine helle Eigenfarbe und eine hohe Lichttransmission auch nach längerer Temperaturbelastung aus. Sie sind außerdem weitgehend frei von unerwünschten Fehlstellen im Polycarbonat selbst und natürlich lösungsmittelfrei.

Weitgehend frei von unerwünschten Fehlstellen im Polycarbonat im Sinne des erfindungsgemäßen Verfahrens heißt, daß der Gehalt an Verzweiger der Formel (I) 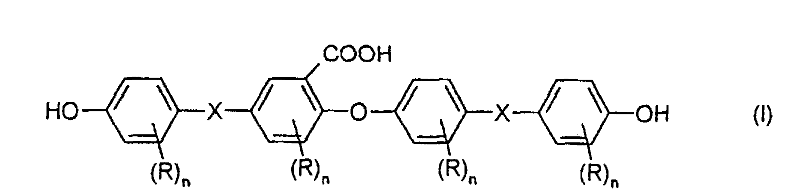 mit
- X: = C₁-C₈-Alkyliden oder Cycloalkyliden, S oder Einfachbindung,
- R: = CH₃, Cl, Br und
- n: = 0, 1 oder 2,
im Polycarbonat einen Wert nach Totalverseifung und HPLC-Bestimmung von nicht mehr als 300 ppm, vorzugsweise von nicht mehr als 100 ppm, hat.

Für die Herstellung der erfindungsgemäß einzusetzenden Copolycarbonate geeignete Diphenole sind solche der allgemeinen Formel (II) 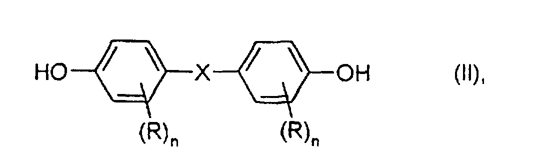 wobei

X, R und n die Bedeutung von Formel (I) haben.

Geeignete Diphenole sind beispielsweise in den US-Patenten 3 028 365, 2 999 835, 3 062 781, 3 148 172 und 4 982 014, in den deutschen Offenlegungsschriften 1 570 703 und 2 063 050, sowie in der Monographie ,,H. Schnell, Chemistry and Physics of Polycarbonates, Interscience Publishers, New York, 1964" beschrieben.

Bevorzugte Diphenole sind:
4,4'-Dihydroxydiphenyl,
2,2-Bis-(4-hydroxyphenyl)-propan,
2,4-Bis-(4-hydroxyphenyl)-2-methylbutan,
1,1-Bis-(4-hydroxyphenyl)-cyclohexan,
2,2-Bis-(3-methyl-4-hydroxyphenyl)-propan,
2,2-Bis-(3-chlor-4-hydroxyphenyl)-propan,
Bis-(3,5-dimethyl-4-hydroxyphenyl)-methan,
2,2-Bis-(3,5-dimethyl-4-hydroxyphenyl)-propan,
2,4-Bis-(3,5-dimethyl-4-hydroxyphenyl)-2-methylbutan,
1,1-Bis-(3,5-dimethyl-4-hydroxyphenyl)-cyclohexan,
1,1-Bis-(4-hydroxyphenyl)-3,3,5-trimethylcyclohexan,
1,1-Bis-(4-hydroxyphenyl)-3-methylcyclohexan,
1,1-Bis-(4-hydroxyphenyl)-3,3-dimethylcyclohexan,
1,1-Bis-(4-hydroxyphenyl)-4-methylcyclohexan,
2,2-Bis-(3,5-dichlor-4-hydroxyphenyl)-propan und
2,2-Bis-(3,5-dibrom-4-hydroxyphenyl)-propan.

Besonders bevorzugte Diphenole sind z.B.:
2,2-Bis-(4-hydroxyphenyl)-propan,
2,2-Bis-(3,5-dimethyl-4-hydroxyphenyl)-propan,
1,1-Bis-(4-hydroxyphenyl)-cyclohexan,
1,1-Bis-(4-hydroxyphenyl)-3,3,5-trimethylcyclohexan,
1,1-Bis-(4-hydroxyphenyl)-3-methylcyclohexan,

Insbesondere sind 2,2-Bis-(4-hydroxyphenyl)-propan und 1,1-Bis-(4-hydroxyphenyl)-3,3,5-trimethylcyclohexan bevorzugt.

Es können auch beliebige Mischungen der vorgenannten Diphenole verwendet werden.

Die Polycarbonate können durch den Einsatz geringer Mengen Verzweiger bewußt und kontrolliert verzweigt werden. Einige geeignete Verzweiger sind:
Phloroglucin,
4,6-Dimethyl-2,4,6-tri-(4-hydroxyphenyl)-hepten-2,
4,6-Dimethyl-2,4,5-tri-(4-hydroxyphenyl)-heptan,
1,3,5-Tri-(4-hydroxyphenyl)-benzol,
1,1,1-Tri-(4-hydroxyphenyl)-ethan,
Tri-(4-hydroxyphenyl)-phenylmethan,
2,2-Bis[4,4-bis-(4-hydroxyphenyl)-cyclohexyl-propan,
2,4-Bis-(4-hydroxyphenyl-isopropyl)-phenol,
2,6-Bis-(2-hydroxy-5'-methyl-benzyl)-4-methylphenol,
2-(4-Hydroxyphenyl)-2-(2,4-dihydroxyphenyl)-propan,
Hexa-(4-(4-hydroxyphenyl-isopropyl)-phenyl)-ortho-terephthalsäureester,
Tetra-(4-hydroxyphenyl)-methan,
Tetra-(4-(4-hydroxyphenyl-isopropyl)-phenoxy)-methan,
1,4-Bis-(4',4"-dihydroxytriphenyl)-methyl)-benzol und insbesondere
α,α',α''-Tris(4-hydroxyphenyl)-1,3,5-triisopropylbenzol.

Weitere mögliche Verzweiger sind:
2,4-Dihydroxybenzoesäure,
Trimesinsäure,
Trimesinsäuretrichlorid,
Cyanurchlorid und
3,3-Bis-(3-methyl-4-hydroxyphenyl)-2-oxo-2,3-dihydroindol

Die gegebenenfalls mitzuverwendenden 0,05 bis 2 Mol-%, bezogen auf eingesetzte Diphenole, an Verzweiger können mit den Diphenolen zusammen eingesetzt werden.

Kohlensäurediester im Sinne vorliegender Erfindung sind Di-C₆-C₁₂-Arylester, vorzugsweise die Diester von Phenol oder alkylsubstituierten Phenolen, also Diphenylcarbonat oder z.B. Dikresylcarbonat. Bezogen auf 1 Mol Bisphenol werden die Kohlensäurediester in 1,01 bis 1,30 Mol, bevorzugt in 1,02 bis 1,15 Mol eingesetzt.

Es ist darauf zu achten, daß die Reaktionskomponenten, also die Diphenole und die Kohlensäurediarylester möglichst frei von Alkali- und Erdalkaliionen sind. Derart reine Kohlensäurediarylester bzw. Diphenole sind erhältlich, indem man die Kohlensäurediarylester bzw. Diphenole umkristallisiert, wäscht oder destilliert. Beim erfindungsgemäßen Verfahren soll der Gehalt an Alkali- und Erdalkalimetallionen sowohl im Diphenol als auch im Kohlensäurediester einen Wert von <0,01 ppm betragen.

Die Polycarbonatherstellung kann in einer Stufe durchgeführt werden, die aromatischen Dihydroxyverbindungen und die Kohlensäurediester werden dann nach den aus der Literatur üblichen Polykondensationsbedingungen umgesetzt.

Dies sind beispielsweise das Aufschmelzen der aromatischen Dihydroxyverbindung und des Kohlensäurediesters bei Temperaturen von 80 bis 250°C, bevorzugt 100 bis 230°C, besonders bevorzugt 120 bis 190°C unter normalem Druck in 0,1 bis 5 Stunden, bevorzugt 0,25 bis 3 Stunden. Die Zugabe des erfindungsgemäßen Katalysators oder Kombinationen der erfindungsgemäßen Katalysatoren kann vor dem Aufschmelzen oder zu den aufgeschmolzenen Edukten erfolgen. Nun wird durch Anlegen von Vakuum und Erhöhung der Temperatur durch Abdestillieren des Monophenols ein Oligocarbonat aus der aromatischen Dihydroxyverbindung und dem Kohlensäurediester hergestellt. Im weiteren sind dann bei der Polykondensation durch weiteres Erhöhen der Temperatur auf 240 bis 400°C und Erniedrigung des Drucks bis auf 0,01 mbar das Polycarbonat hergestellt.

Es kann aber auch vorteilhaft sein, die Polykondensation in zwei oder mehreren Stufen durchzuführen.

Die als Zwischenstufe hergestellten Oligocarbonate weisen dabei mittlere Molekulargewichte M_{w} von 3000 bis 24 000, bevorzugt 5000 bis 20 000 auf, ermittelt durch Messung der relativen Lösungsviskosität in Dichlormethan oder in Mischungen gleicher Gewichtsmengen Phenol/o-Dichlorbenzol, geeicht durch Lichtstreuung. Die Temperatur zur Herstellung dieser Oligocarbonate liegt zwischen 100°C und 290°C, bevorzugt zwischen 150°C und 280°C. Die bei der Umesterung zum Oligocarbonat entstehenden Monophenole werden durch Anlegen von Vakuum von 1 bar bis 0,5 mbar, bevorzugt <500 mbar bis 1 mbar entfernt.

Durch Polykondensation des Oligocarbonats, gegebenenfalls unter weiterer Zugabe der erfindungsgemäßen Katalysatoren in das Oligocarbonat und durch weiteres Erhöhen der Temperatur auf 230 bis 400°C, bevorzugt auf 250 bis 320°C und bei einem Druck <100 mbar bis 0,01 mbar wird das Polycarbonat hergestellt.

Die Reaktion der aromatischen Dihydroxyverbindung und des Kohlensäurediesters im Sinne des erfindungsgemäßen Verfahrens kann kontinuierlich oder diskontinuierlich beispielsweise in Rührkesseln, Dünnschichtverdampfern, Fallfilmverdampfern, Rührkesselkaskaden, Extrudern, Knetern, einfachen Scheibenreaktoren und Hochviskosscheibenreaktoren durchgeführt werden.

Die aromatischen Polycarbonate des erfindungsgemäßen Verfahrens sollen mittlere Gewichtsmolmassen von 18 000 bis 60 000, vorzugsweise von 19 000 bis 40 000 haben, ermittelt durch Messung der relativen Lösungsviskosität in Dichlormethan oder in Mischungen gleicher Gewichtsmengen Phenol/o-Dichlorbenzol, geeicht durch Lichtstreuung.

Die erfindungsgemäß hergestellten Polycarbonate haben neben der bereits erwähnten hellen Eigenfarbe, bevorzugt einen niedrigen OH-Endgruppengehalt von <1200 ppm, sind hydrolysestabil und zeichnen sich, wie bereits erwähnt, durch eine Langzeitthermostabilität aus.

Zur Begrenzung der mittleren Gewichtsmolmassen M_{W} der Polymeren können in bekannter Weise (EP 360 578) Molmassenregler, wie beispielsweise Alkylphenol (Isooctylphenol, t-Butylphenol, Cumylphenol), in den erforderlichen Mengen eingesetzt werden.

Zur Modifizierung der Eigenschaften können den erfindungsgemäß hergestellten Polycarbonaten Füll- und Verstärkungsstoffe zugemischt werden. Als solche sind u.a. in Betracht zu ziehen: Stabilisatoren (z.B. UV-, Thermo-, Gammastrahlenstabilisatoren), Antistatika, Fließhilfsmittel, Entformungsmittel, Brandschutzmittel, Pigmente, fein zerteilte Mineralien, Faserstoffe, z.B. Alkyl- und Arylphosphite, -phosphate, -phosphane, niedermolekulare Carbonsäureester, Halogenverbindungen, Salze, Kreide, Quarzmehl, Glas und Kohlenstoffasern.

Weiterhin können den erfindungsgemäßen Polycarbonaten auch andere Polymere zugemischt werden, z.B. Polyolefine, Polyurethane, Polystyrol.

Der Zusatz dieser Stoffe erfolgt vorzugsweise auf herkömmlichen Aggregaten zum fertigen Polycarbonat, kann jedoch, je nach den Erfordernissen, auf einer anderen Stufe des erfindungsgemäßen Verfahrens erfolgen.

Darüber hinaus ist für besondere Anwendungen auch die Modifizierung der Polycarbonate durch Einkondensation von Blöcken, Segmenten und Comonomeren möglich, z.B. von Siloxanblöcken mit OH-Endgruppen, wie aromatischen und aliphatischen Polyestern mit OH- und Carbonsäure-Endgruppen, von Polyphenylensulfid-Blöcken mit OH-Endgruppen oder von Polyphenylenoxid-Blöcken mit OH-Endgruppen.

Die erfindungsgemäß erhältlichen Polycarbonate können in bekannter Weise auf bekannten Maschinen zu beliebigen Formkörpern verarbeitet werden.

Die erfindungsgemäß hergestellten Polycarbonate sind technisch brauchbar für die üblichen Anwendungsgebiete, also in der Elektronik, im Bausektor und im Kraftfahrzeugbau, also beispielsweise als Trägermaterial für Datenspeicher, für Stegplatten zur Abdeckung oder als Gehäusematerial von elektronischen Geräten.

### Beispiele

### Vergleichsbeispiel 0

In einem 500 ml Dreihalskolben mit Rührer, Innenthermometer und Vigreuxkolonne (30 cm, verspiegelt) mit Brücke werden 114,15 g (0,500 Mol) Bisphenol A und 113,54 g (0,530 Mol) Diphenylcarbonat eingewogen. Die Apparatur wird durch Anlegen von Vakuum und Spülen mit Stickstoff (3 mal) vom Luftsauerstoff befreit und das Gemisch auf 150°C aufgeheizt. Das entstehende Phenol wird bei 100 mbar abdestilliert. Gleichzeitig wird die Temperatur bis auf 250°C gesteigert. Nach 1 Stunde wird das Vakuum auf 10 mbar verbessert. Durch Absenken des Vakuums auf 0,5 mbar und Temperaturerhöhung auf 280°C wird die Polykondensation erreicht. Man erhält ein lösungsmittelfreies Polycarbonat mit einer relativen Lösungsviskosität von 1,193 (Dichlormethan, 25°C, 5 g/l). Der Gehalt an Verzweiger der Formel (I) im hergestellten Polycarbonat beträgt 12 ppm. Der phenolische OH-Wert des Polycarbonats beträgt 980 ppm.

### Vergleichsbeispiel 1

In einem 500 ml Dreihalskolben mit Rührer, Innenthermometer und Vigreuxkolonne (30 cm, verspiegelt) mit Brücke werden 114,15 g (0,500 Mol) Bisphenol A und 113,54 g (0,530 Mol) Diphenylcarbonat eingewogen. Die Apparatur wurde durch Anlegen von Vakuum und Spülen mit Stickstoff (3 mal) vom Luftsauerstoff befreit und das Gemisch auf 150°C aufgeheizt. Jetzt werden 0,125 µl (5*10⁻⁴ Mol-%) Piperidin, bezogen auf Bisphenol A, zugegeben und das entstehende Phenol bei 100 mbar abdestilliert. Gleichzeitig wird die Temperatur bis auf 250°C gesteigert. Nach 1 Stunde wird das Vakuum auf 10 mbar verbessert. Durch Absenken des Vakuums auf 0,5 mbar und Temperaturerhöhung auf 280°C wird die Polykondensation erreicht. Man erhält ein lösungsmittelfreies Polycarbonat mit einer relativen Lösungsviskosität von 1,201 (Dichlormethan, 25°C, 5 g/l). Der Gehalt an Verzweiger der Formel (I) im hergestellten Polycarbonat beträgt 15 ppm. Der phenolische OH-Wert des Polycarbonats beträgt 870 ppm.

### Vergleichsbeispiel 2

Wie Vergleichsbeispiel 1, nur werden 1,97 µl (4*10⁻³ Mol-%) Methylmorpholin eingesetzt. man erhält ein lösungsmittelfreies Polycarbonat mit einer relativen Lösungsviskosität von 1,204 (Dichlormethan, 25°C, 5 g/l). Der Gehalt an Verzweiger der Formel (I) im hergestellten Polycarbonat beträgt 10 ppm. Der phenolische OH-Wert des Polycarbonats beträgt 890 ppm.

### Beispiel 1

In einem 500 ml Dreihalskolben mit Rührer, Innenthermometer und Vigreuxkolonne (30 cm, verspiegelt) mit Brücke werden 114,15 g (0,500 Mol) Bisphenol A und 113,54 g (0,530 Mol) Diphenylcarbonat eingewogen. Die Apparatur wurde durch Anlegen von Vakuum und Spülen mit Stickstoff (3 mal) vom Luftsauerstoff befreit und das Gemisch auf 150°C aufgeheizt. Jetzt werden 0,34 µl (5*10⁻⁴ Mol-%) N-Ethylpiperidin, bezogen auf Bisphenol A, zugegeben und das entstehende Phenol bei 100 mbar abdestilliert. Gleichzeitig wird die Temperatur bis auf 250°C gesteigert. Nach 1 Stunde wird das Vakuum auf 10 mbar verbessert. Durch Absenken des Vakuums auf 0,5 mbar und Temperaturerhöhung auf 280°C wird die Polykondensation erreicht. Man erhält ein lösungsmittelfreies Polycarbonat mit einer reiativen Lösungsviskosität von 1,285 (Dichlormethan, 25°C, 5 g/l). Der Gehalt an Verzweiger der Formel (I) im hergestellten Polycarbonat beträgt 20 ppm. Der phenolische OH-Wert des Polycarbonats beträgt 240 ppm.

### Beispiel 2

Wie Beispiel 1, nur werden 2,74 µl (4*10⁻³ Mol-%) N-Ethylpiperidin eingesetzt Man erhält ein farbhelles, lösungsmittelfreies Polycarbonat mit einer relativen Lösungsviskosität von 1,260 (Dichlormethan, 25°C, 5 g/l). Der Gehalt an Verzweiger der Formel (I) im hergestellten Polycarbonat beträgt 6 ppm. Der phenolische OH-Wert des Polycarbonats beträgt 290 ppm.

### Beispiel 3

Wie Beispiel 2, nur es wird bei 300°C 1,5 h in der letzten Stufe der Polykondensation polymerisiert. Man erhält ein farbhelles, lösungsmittelfreies Polycarbonat mit einer relativen Lösungsviskosität von 1,299 (Dichlormethan, 25°C, 5 g/l). Der Gehalt an Verzweiger der Formel (6) im hergestellten Polycarbonat beträgt 10 ppm. Der phenolische OH-Wert des Polycarbonats beträgt 280 ppm.

### Beispiel 4

Wie Beispiel 1, nur mit 4*10⁻³ Mol-% N-Propylpiperidin als Katalysator. Man erhält ein lösungsmittelfreies Polycarbonat mit einer relativen Lösungsviskosität von 1,264 (Dichlormethan, 25°C, 5 g/l). Der Gehalt an Verzweiger der Formel (I) im hergestellten Polycarbonat beträgt 13 ppm. Der phenolische OH-Wert des Polycarbonats beträgt 340 ppm.

### Beispiel 5

Wie Beispiel 1, nur mit 4*10⁻³ Mol-% N-Ethylmorpholin als Katalysator. Man erhält ein lösungsmittelfreies Polycarbonat mit einer relativen Lösungsviskosität von 1,259 (Dichlormethan, 25°C, 5 g/l). Der Gehalt an Verzweiger der Formel (I) im hergestellten Polycarbonat beträgt 5 ppm. Der phenolische OH-Wert des Polycarbonats beträgt 330 ppm.

### Beispiel 6

Wie Beispiel 1, nur mit 4*10⁻³ Mol-% N-Propylmorpholin als Katalysator. Man erhält ein lösungsmittelfreies Polycarbonat mit einer relativen Lösungsviskosität von 1,259 (Dichlormethan, 25°C, 5 g/l). Der Gehalt an Verzweiger der Formel (I) im hergestellten Polycarbonat beträgt 5 ppm. Der phenolische OH-Wert des Polycarbonats beträgt 330 ppm.

| **Lichttransmission bei 420 nm, Schichtdicke 4 mm, nach Temperung bei 140°C** | | | | |
|---|---|---|---|---|
| Beispiel | 0 Tage | 7 Tage | 14 Tage | 21 Tage |
| 1 (Vergleich) | 83 | 82,5 | 82,2 | 81,3 |
| 2 (Vergleich) | 83,5 | 82,9 | 81,7 | 81,0 |
| 1 | 86,2 | 85,6 | 85,3 | 85,1 |
| 2 | 85,6 | 85,0 | 84,8 | 84,7 |
| 3 | 86 | 85,8 | 85,3 | 85,1 |
| 4 | 85,3 | 84,9 | 84,5 | 83,8 |
| 5 | 85,8 | 85,2 | 84,5 | 84,1 |
| 6 | 85,5 | 85,0 | 84,7 | 83,9 |

## Patentansprüche

1. Verfahren zur Herstellung von thermoplastischen Polycarbonaten nach dem Umesterungsverfahren in der Schmelze aus Diphenolen, Kohlensäurediarylestern und gegebenenfalls Verzweigern und/oder Monophenolen bei Temperaturen zwischen 80°C und 400°C und Drücken zwischen 1000 mbar und 0,01 mbar unter Mitverwendung von Katalysatoren, **dadurch gekennzeichnet, daß** man als Katalysatoren N-alkylsubstituierte Piperidine oder N-alkylsubstituierte Morpholine mit N-Alkylsubstituenten von C₂-C₁₂ in Mengen von 10⁻² bis 10⁻⁸ Mol, pro Mol Diphenol, einsetzt.

2. Verfahren gemäß Anspruch 1, **dadurch gekennzeichnet, daß** man als Katalysatoren solche mit N-Alkylsubstituenten von C₂-C₈ einsetzt.

3. Verfahren gemäß Anspruch 1, **dadurch gekennzeichnet, daß** man als Katalysatoren solche mit N-Alkylsubstituenten von C₂-C₅ einsetzt.

4. Verfahren zur Herstellung von Polycarbonaten mit einem Gehalt an Verzweigerstruktur der Formel (I) 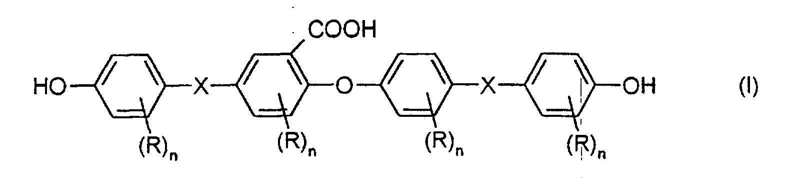 im Polycarbonat nach Totalverseifung und HPLC-Bestimmung von nicht mehr als 300 ppm gemäß Anspruch 1.

## Claims

1. A process for producing thermoplastic polycarbonates by the transesterification method in the melt, from diphenols, carboxylic acid diaryl esters and optionally branching agents and/or monophenols, at temperatures between 80°C and 400°C and at pressures between 1000 mbar and 0.01 mbar, with the use in conjunction of catalysts, **characterised in that** N-alkyl-substituted piperidines or N-alkyl-substituted morpholines comprising C₂-C₁₂ N-alkyl substituents are used as catalysts in amounts of 10⁻² to 10⁻⁸ mol per mol diphenol.

2. A process according to claim 1, **characterised in that** catalysts comprising C₂-C₈ N-alkyl substituents are used as catalysts.

3. A process according to claim 1, **characterised in that** catalysts comprising C₂-C₅ N-alkyl substituents are used as catalysts.

4. A process according to claim 1 for producing polycarbonates having a content of branching agent structure of formula (I) 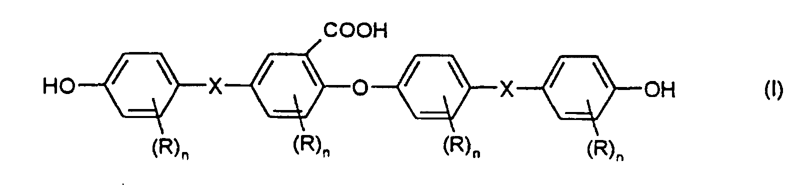 of not more than 300 ppm in the polycarbonate after complete saponification, as determined by HPLC.

## Revendications

1. Procédé de préparation de polycarbonates thermoplastiques d'après un procédé de transestérification à l'état fondu de diphénols, d'esters diaryliques d'acide carbonique et le cas échéant, d'agents de ramification et/ou de monophénols, à des températures allant de 80°C à 400°C et à des pressions allant de 1000 mbar à 0,01 mbar, avec intervention de catalyseurs, qui est **caractérisé en ce que** l'on met en oeuvre comme catalyseur, une pipéridine N-alcoylsubstituée ou une morpholine N-alcoylsubstituée, à substituant N-alcoyle en C₂-C₁₂, en des quantités allant de 10⁻² à 10⁻⁸ mole, par mole de diphénol.

2. Procédé suivant la revendication 1, **caractérisé en ce que** l'on met en oeuvre comme catalyseur, ceux avec un substituant N-alcoyle en C₂-C₈.

3. Procédé suivant la revendication 1, **caractérisé en ce que** l'on met en oeuvre comme catalyseur, ceux avec un substituant N-alcoyle en C₂-C₅.

4. Procédé de préparation de polycarbonates avec une teneur en structure d'agent de ramification de formule (I) : 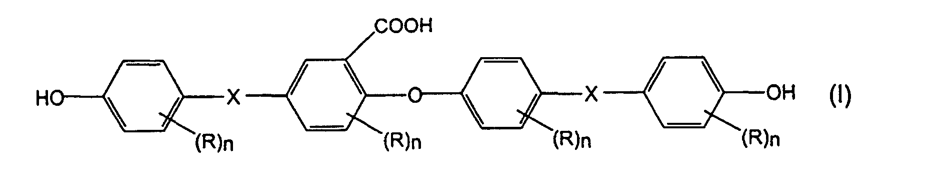 dans le polycarbonate après saponification totale et détermination par HPLC, non supérieure à 300 ppm suivant la revendication 1.
